# EUROPEAN PATENT APPLICATION

(11) **EP 4 730 478 A1**
(43) Date of publication of application: **22.04.2026**
(21) Application number: 25206959.6
(22) Date of filing: 06.10.2025
(51) Int. Cl.: H01M 10/42, H01M 10/48, H01M 50/105, H01M 50/211, H01M 50/578

(54) **SECONDARY BATTERY AND BATTERY MODULE**

(30) Priority: 15.10.2024 KR 20240140261
(71) Applicant: SAMSUNG SDI CO., LTD., Yongin-si, Gyeonggi-do 17084 (KR)
(72) Inventor: KAM, Jae Woo, 16678 Suwon-si, Gyeonggi-do (KR)
(74) Representative: Gulde & Partner

(57) **Abstract**

A secondary battery and a battery module are disclosed. A secondary battery includes a case accommodating an electrode assembly; and a sensor, and the sensor includes a circuit on a surface of the case and configured to be shorted in response to a volume of the case reaching a certain volume or more; and a processor configured to determine a state of the secondary battery based on whether the circuit is shorted.

## Description

### BACKGROUND

### 1. Field

Aspects of embodiments of the present disclosure relate to a secondary battery and/or a battery module.

### 2. Discussion of Related Art

A secondary battery is a chargeable and dischargeable battery, unlike a primary battery that is not chargeable. Low-capacity secondary batteries are used in portable small electronic devices, such as smartphones, feature phones, notebook computers, digital cameras, and camcorders, and large-capacity secondary batteries are widely used as power sources and power storage for driving motors of hybrid vehicles, electric vehicles, and the like. Such a secondary battery includes electrodes including a positive electrode and/or a negative electrode, an electrode assembly including the electrodes, a case accommodating the electrode assembly, an electrode terminal connected to the electrode assembly, etc.

Demand for high-capacity secondary batteries has increased with the development of technologies. Accordingly, a plurality of secondary batteries may be electrically connected and used. For example, secondary batteries in the form of a secondary battery module including a plurality of secondary batteries and/or a secondary battery pack including a plurality of secondary battery modules may be applied to electronic devices. The electronic devices may be electronic devices that require high-output and/or high-capacity batteries, and examples of the electronic devices include electric vehicles and the like.

### SUMMARY

The invention is defined by the appended claims. The description that follows is subjected to this limitation. Any disclosure lying outside the scope of said claims is only intended for illustrative as well as comparative purposes.

According to an aspect of embodiments of the present disclosure, a secondary battery and/or a battery module including a sensor is provided. According to an aspect of embodiments of the present invention, a secondary battery and/or a battery module capable of sensing a state of a secondary battery is provided.

For example, according to an aspect of one or more embodiments of the present invention, a secondary battery and/or a battery module capable of detecting whether a secondary battery is in a swollen state is provided.

According to an aspect of one or more embodiments of the present invention, a secondary battery and/or a battery module capable of detecting whether a secondary battery is physically swollen is provided.

According to an aspect of one or more embodiments of the present invention, a secondary battery and/or a battery module capable of, when a secondary battery corresponds to a swollen state, slowing down the rate of progress of swelling of the secondary battery is provided.

However, aspects and objectives of the present invention are not limited to those mentioned above, and other aspects and objectives will be understood by those of ordinary skill in the art from the description of the invention provided below.

According to one or more embodiments of the present invention, a secondary battery includes a case accommodating an electrode assembly; and a sensor, wherein the sensor includes a circuit on a surface of the case and configured to be shorted in response to a volume of the case reaching a certain (e.g., predetermined) volume or more; and a processor configured to determine a state of the secondary battery based on whether the circuit is shorted.

According to one or more embodiments of the present invention, a battery module includes a plurality of secondary batteries; a housing accommodating the plurality of secondary batteries; and a sensor configured to sense a state of a secondary battery of the plurality of secondary batteries, wherein the sensor includes a circuit on a surface of the secondary battery and configured to be shorted in response to a volume of the secondary battery changing by a certain (e.g., predetermined) size or more; and a processor configured to determine a state of the secondary battery based on whether the circuit is shorted.

### BRIEF DESCRIPTION OF THE DRAWINGS

The following drawings provided herein illustrate some embodiments of the present invention by example to enable technical concepts of the present invention to be further understood together with the detailed description of the invention provided below; however, the present invention should not be interpreted only with matters in such drawings.
FIGS. 1 and 2 are views schematically illustrating a secondary battery according to an embodiment of the present invention.
FIG. 3 is a view schematically illustrating a secondary battery according to an embodiment of the present invention.
FIG. 4 is a view illustrating an example in which the secondary battery described with reference to FIG. 3 is in a swollen state.
FIG. 5 is a view schematically illustrating a secondary battery according to an embodiment of the present invention.
FIG. 6 is a view illustrating an example in which the secondary battery described with reference to FIG. 5 is in a swollen state.
FIG. 7 is a view schematically illustrating a secondary battery according to an embodiment of the present invention.
FIG. 8 is a view schematically illustrating the secondary battery described with reference to FIG. 7.
FIG. 9 is a view illustrating an example in which the secondary battery described with reference to FIGS. 7 and 8 is in a swollen state.
FIG. 10 is a view schematically illustrating a secondary battery according to an embodiment of the present invention.
FIG. 11 is a view schematically illustrating a battery module according to an embodiment of the present invention.
FIG. 12 is a view schematically illustrating a battery module according to an embodiment of the present invention.

### DETAILED DESCRIPTION

Herein, some embodiments of the present invention will be described in further detail with reference to the accompanying drawings. The embodiments described herein and configurations shown in the drawings are merely some embodiments of the present invention and do not necessarily represent all the technical aspects of the present invention. Accordingly, it is to be understood that various equivalents and modifications that can replace the embodiments may be present at the time of filing the present application. Also, the expressions "comprise," "include," "comprising," and/or "including" used in this specification specify the presence of mentioned shapes, numbers, steps, operations, members, elements, and/or groups thereof and do not exclude the presence or addition of one or more other shapes, numbers, steps, operations, members, elements, and/or groups thereof. In addition, when describing embodiments of the present invention, the expressions "can" and "may" may include "one or more embodiments of the present invention."

In addition, in order to help understanding of the invention, the accompanying drawings may not be drawn to scale, and dimensions of some components may be exaggerated. Also, the same reference numerals may be assigned to the same components in different embodiments.

When two compared objects are mentioned as being "the same," it means that they are the same or substantially the same. Being substantially the same may include a case of having a variation that is considered low in the art, for example, a variation within 5%. Also, when a certain parameter is described as being uniform in a predetermined region, this may mean that the parameter is uniform from an average perspective.

Although terms such as "first" and "second" may be used to describe various components, of course, the components are not limited by these terms. The terms are used to distinguish one component from another component, and a first component may also be referred to as a second component unless particularly stated otherwise.

Throughout the specification, each component may be singular or plural unless particularly stated otherwise.

When an arbitrary configuration is described as being disposed "above (or below)" a component or "on (or under)" a component, this may mean not only that the arbitrary configuration is disposed in contact with an upper surface (or lower surface) of the component but also that another configuration may be interposed between the component and the arbitrary configuration disposed on (or under) the component.

Also, when a certain component is described as being "connected," "coupled," or "linked" to another component, it is to be understood that, although the components may be directly connected or linked to each other, another component may be "interposed" between the two components, or the two components may be "connected." "coupled," or "linked" to each other through another component. In addition, when a certain part is described as being electrically coupled to another part, this not only includes a case in which the two parts are directly connected, but also includes a case in which the two parts are connected with another device disposed therebetween.

Throughout the specification, "A and/or B" means A, B, or A and B unless particularly stated otherwise. That is, the term "and/or" includes any and all combinations of a plurality of listed items. "C to D" means larger than or equal to C and smaller than or equal to D unless particularly stated otherwise.

When phrases such as "at least one of A, B, and C," "at least one of A, B, or C," "at least one selected from the group consisting of A, B, and C," and "at least one selected from A, B, and C" are used in designating a list of elements A, B, and C, the phrases may indicate any and all suitable combinations.

The term "use" may be considered a synonym of the term "utilize." As used in this specification, the terms "substantially," "approximately," and similar terms are used as approximate terms but are not used as degree terms, and they are for taking into account inherent deviations of measured or calculated values evident to those skilled in the art.

Although the terms "first," "second," "third," etc., may be used herein to describe various components, elements, regions, layers and/or sections, these components, elements, regions, layers and/or sections are not to be limited by these terms. These terms may be used to distinguish one element, component, region, layer, or section from another element, component, region, layer, or section. Thus, a first element, component, region, layer, or section discussed below could be termed a second element, component, region, layer, or section without departing from the teachings of the example embodiments.

Spatially relative terms, such as "beneath," "below," "lower," "above," "upper" and the like, may be used herein for ease of description to describe one element or feature's relationship to another element(s) or feature(s) as illustrated in the figures. The spatially relative positions are intended to encompass different orientations of the device in use or operation in addition to the orientation depicted in the figures. For example, if the device in the figures is turned over, elements described as "below" or "beneath" other elements would then be oriented "above" the other elements. Thus, the term "below" can encompass an orientation of both above and below.

The terms used in the present specification are for describing embodiments of the present disclosure and are not intended to limit the present disclosure.

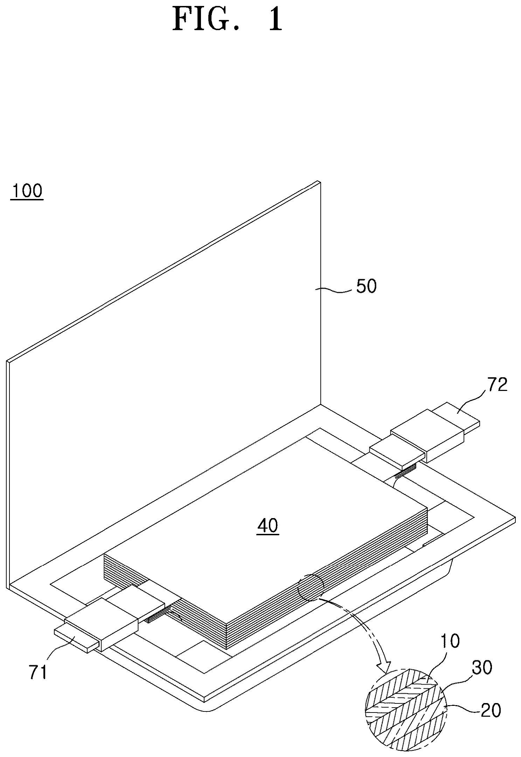

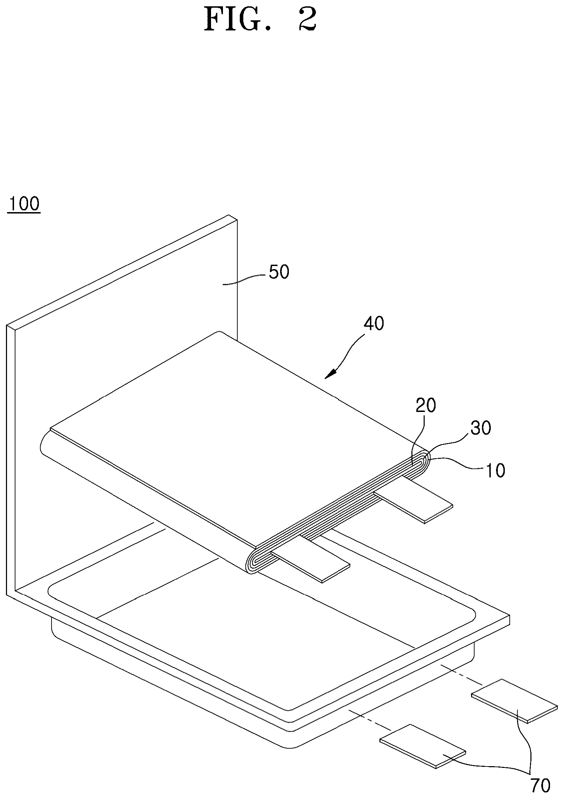

FIGS. 1 and 2 are views schematically illustrating a secondary battery according to an embodiment of the present invention.

A secondary battery 100 may be classified as a cylindrical type, a prismatic type, a pouch type, a coin type, etc., according to a form thereof. FIGS. 1 and 2 are schematic diagrams illustrating a secondary battery according to an embodiment of the present invention, and, for example, show the form of a pouch type battery. The secondary battery 100 may include an electrode assembly 40 in which a separator 30 is interposed between a positive electrode 10 and a negative electrode 20 and a case 50 in which the electrode assembly 40 is embedded or accommodated. The positive electrode 10, the negative electrode 20, and the separator 30 may be impregnated with an electrolyte (not illustrated). The secondary battery 100 may include electrode tabs 70, that is, a positive electrode tab 71 and a negative electrode tab 72, functioning as electrical paths for guiding the current formed in the electrode assembly 40 to the outside.

As a positive electrode active material, a compound capable of reversible intercalation and deintercalation of lithium (a lithiated intercalation compound) may be used. In an embodiment, one or more composite oxides of lithium and a metal selected from cobalt, manganese, nickel, and combinations thereof may be used.

The composite oxides may be lithium transition metal composite oxides. Examples of the composite oxides may include lithium nickel oxide, lithium cobalt oxide, lithium manganese oxide, a lithium iron phosphate compound, cobalt-free nickel-manganese oxide, or a combination thereof.

As an example, the composite oxide may be a compound represented by any of the following chemical formulas: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LIₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂GₚO₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In an embodiment, for example, the positive electrode active material may be a high-nickel positive electrode active material having a nickel content of 80 mol% or more, 85 mol% or more, 90 mol% or more, 91 mol% or more, or 94 mol% or more and 99 mol% or less with respect to 100 mol% of the metal other than lithium in a lithium transition metal composite oxide. The high-nickel positive electrode active material can realize a high capacity and thus may be applied to a high-capacity, high-density secondary battery.

The positive electrode 10 for the secondary battery 100 may include a current collector and a positive electrode active material layer formed on the current collector. The positive electrode active material layer may include a positive electrode active material and further include a binder and/or a conductive additive.

For example, the positive electrode may further include an additive that may serve as a sacrificial anode.

In an embodiment, the content of the positive electrode active material may be 90 wt% to 99.5 wt% with respect to 100 wt% of the positive electrode active material layer, and the content of the binder and the content of the conductive additive may each be 0.5 wt% to 5 wt% with respect to 100 wt% of the positive electrode active material layer.

The binder may ensure that positive electrode active material particles are well adhered to each other and the positive electrode active material is well adhered to the current collector. Representative examples of the binder may include a polymer including polyvinyl alcohol, carboxymethyl cellulose, hydroxypropyl cellulose, diacetyl cellulose, polyvinyl chloride, carboxylated polyvinyl chloride, polyvinyl fluoride, and ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acryl resin, polyester resin, nylon, and the like, but are not limited thereto.

The conductive additive imparts conductivity to an electrode, and any suitable electrically conductive material that does not cause chemical changes may be used as the conductive additive in a battery. Examples of the conductive additive may include: carbon-based materials, such as natural graphite, artificial graphite, carbon black, acetylene black, ketjen black, carbon fibers, carbon nanofibers, and carbon nanotubes; metal-based materials in the form of metal powder or metal fibers and containing copper, nickel, aluminum, silver, and the like; conductive polymers, such as polyphenylene derivatives; or a mixture thereof.

In an embodiment, Al may be used as the current collector, but the current collector is not limited thereto.

A negative electrode active material includes a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon may include graphite, such as natural graphite or artificial graphite that is irregularly shaped, plate-shaped, flake-shaped, spherical, or fibrous, and examples of the amorphous carbon may include soft carbon, hard carbon, mesophase pitch carbide, and calcinated coke.

In an embodiment, an alloy of the lithium metal may include lithium metal and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may be silicon, a silicon-carbon composite, SiOₓ (0<x≤2), a Si-Q alloy (where Q is selected from alkali metals, alkali earth metals, Group 13 elements, Group 14 elements (excluding Si), Group 15 elements, Group 16 elements, transition metals, rare earth elements, and combinations thereof), or a combination thereof. In an embodiment, the Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may have a form including a silicon particle and amorphous carbon coated on a surface of the silicon particle. For example, the silicon-carbon composite may include a secondary particle (core) in which silicon primary particles are assembled and an amorphous carbon coating layer (shell) located on a surface of the secondary particle. The amorphous carbon may also be located between the silicon primary particles. For example, the silicon primary particles may be coated with amorphous carbon. The secondary particle may be dispersed in an amorphous carbon matrix.

The silicon-carbon composite may further include crystalline carbon. For example, the silicon-carbon composite may include a core including crystalline carbon and a silicon particle and an amorphous carbon coating layer located on a surface of the core.

The Si-based negative electrode active material or Sn-based negative electrode active material may be used by being mixed with a carbon-based negative electrode active material.

The negative electrode 20 for the secondary battery 100 includes a current collector and a negative electrode active material layer located on the current collector. The negative electrode active material layer may include a negative electrode active material and further include a binder and/or a conductive additive.

In an embodiment, for example, the negative electrode active material layer may include 90 wt% to 99 wt% of the negative electrode active material, 0.5 wt% to 5 wt% of the binder, and 0 wt% to 5 wt% of the conductive additive.

The binder may ensure that negative electrode active material particles are well adhered to each other and the negative electrode active material is well adhered to the current collector. As the binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

If the aqueous binder is used as the negative electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. In an embodiment, Na, K, or Li may be used as the alkali metal.

The dry binder is a polymer material that can be formed into fibers and may be, for example, polytetrafluoroethylene, polyvinylidene fluoride, a polyvinylidene fluoride-hexafluoropropylene copolymer, polyethylene oxide, or a combination thereof.

The conductive additive imparts conductivity to the electrode, and any suitable electrically conductive material that does not cause chemical changes may be used as the conductive additive in a battery. Specific examples of the conductive additive may include carbon-based materials, such as natural graphite, artificial graphite, carbon black, acetylene black, ketjen black, carbon fibers, carbon nanofibers, and carbon nanotubes; metal-based materials in the form of a metal powder or metal fibers and including copper, nickel, aluminum, silver, and the like; conductive polymers, such as polyphenylene derivatives; or a mixture thereof.

As the negative electrode current collector, copper foil, nickel foil, stainless steel foil, titanium foil, nickel foam, copper foam, a polymer substrate having a conductive metal coated thereon, or combinations thereof may be selected and used.

The electrolyte for the secondary battery 100 includes a nonaqueous organic solvent and a lithium salt.

The nonaqueous organic solvent serves as a medium through which ions involved in an electrochemical reaction of a battery can move.

The nonaqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. Also, as the ketone-based solvent, cyclohexanone or the like may be used. As the alcohol-based solvent, ethyl alcohol, isopropyl alcohol, or the like may be used, and as the aprotic solvent, nitriles such as R-CN (R is a C2 to C20 hydrocarbon group that is straight-chain, branched, or ring-structured and may include a double bond, an aromatic ring, or an ether group); amides such as dimethylformamide; dioxolanes such as 1,3-dioxolane and 1,4-dioxolane; sulfolanes, or the like may be used.

One of the above may be used alone, or two or more of the above may be mixed and used as the nonaqueous organic solvent.

In an embodiment, if the carbonate-based solvent is used, a cyclic carbonate and a chain carbonate may be mixed and used, and the cyclic carbonate and chain carbonate may be mixed at a volume ratio of 1:1 to 1:9.

The lithium salt is a material that is dissolved in an organic solvent and acts as a supply source of lithium ions in a battery to enable the basic operation of a secondary battery and accelerate the movement of lithium ions between a positive electrode and a negative electrode. Representative examples of the lithium salt may include one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethanesulfonate, lithium tetrafluoroethanesulfonate, lithium difluoro bis(oxalato) phosphate (LiDFOB), lithium bis(oxalato)borate (LiBOB), or two or more thereof.

The separator 30 may be present between the positive electrode 10 and the negative electrode 20 according to a type of the secondary battery 100. In an embodiment, polyethylene, polypropylene, polyvinylidene fluoride, or a multi-layer film of two or more thereof may be used as the separator 30, or a mixed multi-layer film such as a polyethylene/polypropylene double-layer separator, a polyethylene/polypropylene/polyethylene triple-layer separator, and a polypropylene/polyethylene/polypropylene triple-layer separator may be used as the separator 30.

The separator 30 may include a porous base and a coating layer located on one surface or both, or opposite, surfaces of the porous base and including an organic material, an inorganic material, or a combination thereof.

The porous base may be a polymer membrane formed of a polymer selected from the group consisting of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be present by being mixed in a single coating layer or may be present in a form in which a coating layer including the organic material and a coating layer including the inorganic material are stacked.

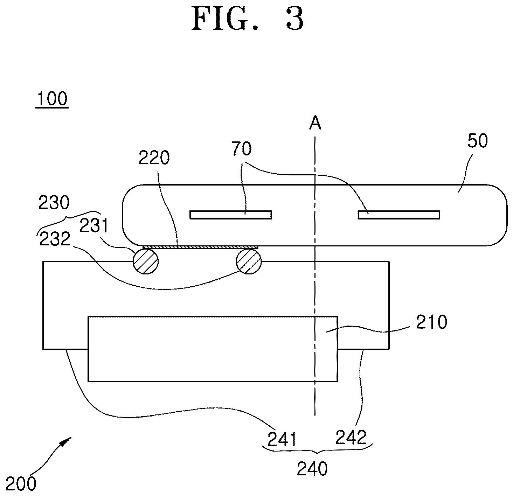

FIG. 3 is a view schematically illustrating a secondary battery according to an embodiment of the present invention.

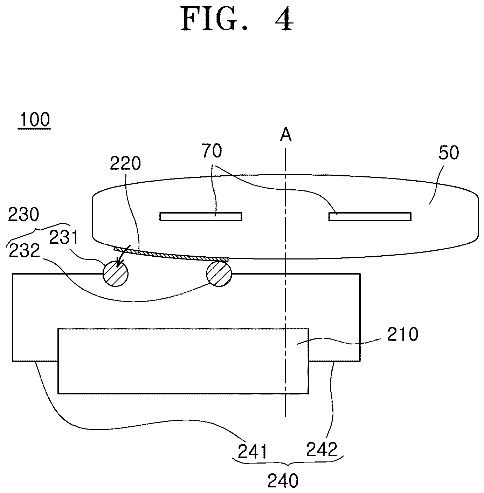

FIG. 4 is a view illustrating an example in which the secondary battery described with reference to FIG. 3 is in a swollen state.

A secondary battery 100 according to an embodiment of the present invention includes an electrode assembly 40; a case 50 storing or accommodating the electrode assembly 40; and a sensor 200.

For example, the electrode assembly 40 may include the electrode assembly 40 described above with reference to FIGS. 1 and 2. For example, the electrode assembly 40 may include a positive electrode 10, a negative electrode 20, and a separator 30. For example, the electrode assembly 40 may be formed of a plurality of positive electrodes 10 and a plurality of negative electrodes 20 being alternately disposed between separators 30 bent in a Z-shape. For example, the electrode assembly 40 may be formed by stacking a plurality of positive electrodes 10, a plurality of negative electrodes 20, and a plurality of separators 30. Accordingly, the electrode assembly 40 may be formed in the shape of a stack cell. In an embodiment, for example, the electrode assembly 40 may be formed by a positive electrode 10, a negative electrode 20, and a separator 30 disposed between the positive electrode 10 and the negative electrode 20 being stacked and then wound. Accordingly, the electrode assembly 40 may be formed in a shape of a jelly roll.

For example, the secondary battery 100 may further include tabs 70 allowing each of the positive electrode 10 and the negative electrode 20 to be electrically connected to the outside. For example, the tabs 70 may include a positive electrode tab 71 connecting the positive electrode 10 to the outside and a negative electrode tab 72 connecting the negative electrode 20 to the outside. For example, the positive electrode tab 71 and the negative electrode tab 72 may extend in directions different from each other as shown in FIG. 1. In an embodiment, for example, the positive electrode tab 71 and the negative electrode tab 72 may extend in directions the same as each other, as shown in FIG. 2.

The case 50 stores the electrode assembly 40. In an embodiment, for example, the case 50 is formed in the form of a pouch. For example, the case 50 may be manufactured by storing the electrode assembly 40 in a pouch-type packaging material, injecting an electrolyte in the pouch type packaging material, and sealing an edge of the pouch-type packaging material.

The electrode assembly 40 may be swollen in a charge-discharge process and/or as a charge-discharge cycle increases. The electrode assembly 40 may generate gas as it deteriorates. In this case, the case 50 storing the electrode assembly 40 may also swell. At this time, the gas may not be smoothly discharged from the case 50, or if the electrode assembly 40 continues to swell, the electrode assembly 40 may be deformed. This may cause smoking and/or ignition of the secondary battery 100.

The sensor 200 may sense a state of the secondary battery 100. For example, the sensor 200 may sense whether the secondary battery 100 corresponds to a swollen state.

If the sensor 200 corresponds to a pressure sensor, the pressure sensor may be mounted on an outer edge of the case 50 and detect physical expansion of the case 50. However, if a pressure sensor is applied, there may be a problem that the size of the secondary battery 100 including the sensor 200 for sensing the pressure of the secondary battery 100 increases. If the sensor 200 corresponds to a temperature sensor, the temperature sensor may estimate swelling of the case 50 through a temperature increase/decrease. However, if a temperature sensor is applied, there may be a problem that it is difficult to check whether the secondary battery 100 has actually expanded.

The sensor 200 according to an embodiment of the present invention addresses the above problems. According to an embodiment of the present invention, the sensor 200 can sense whether the secondary battery 100 has actually expanded using simple components without causing an increase in the size of the secondary battery 100.

The sensor 200 includes a circuit provided on a surface of the case 50 and shorted in response to a volume of the case 50 reaching a certain (e.g., predetermined) volume or more; and a processor 210 to determine a state of the secondary battery 100 based on whether the circuit is shorted.

The circuit is electrically connected to the secondary battery 100. For example, the circuit is mounted on at least a portion of an outer surface of the case 50. The circuit includes a conductive material on at least a portion thereof. In this way, the circuit is electrically connected to the case 50 and/or the secondary battery 100 including the case 50. The circuit is electrically connected also to the processor 210.

Accordingly, the circuit may form a loop between the secondary battery 100 and the processor 210 and may be conductive. If the secondary battery 100 expands, the circuit may at least partially be disconnected.

The processor 210 is electrically connected to the circuit. For example, the processor 210 determines whether the circuit is shorted. The processor 210 may determine that the secondary battery 100 corresponds to a swollen state if the circuit electrically connecting the processor 210 and the secondary battery 100 is shorted. In an embodiment, the processor 210 may determine that the secondary battery 100 does not correspond to a swollen state if the circuit is not shorted and electrically connects the processor 210 and the secondary battery 100.

In an embodiment, for example, the processor 210 may be substituted with a battery management system (BMS) pre-mounted on the secondary battery 100 or may be separately provided in the pre-mounted BMS.

In an embodiment, for example, the processor 210 includes a central processing unit (CPU), a micro-processor unit (MPU), a microcontroller unit (MCU), a graphics processing unit (GPU), a digital signal processor (DSP), a floating-point unit (FPU), an application specific integrated circuit (ASIC), a field programmable gate array (FPGA), etc.

In this way, the sensor 200 according to an embodiment of the present invention may include small, simple components and may easily sense a state of the secondary battery 100 through whether the circuit mounted on the case 50 is shorted.

Various examples of the sensor 200 will be described below.

As described above, the circuit is mounted on the case 50 of the secondary battery 100. The circuit in a conductive state may be disconnected as the secondary battery 100 expands.

In an embodiment, to implement such a structure, for example, the circuit may include a conductor 220; and points 230.

In an embodiment, for example, the circuit includes a conductor 220 attached to a surface of the case 50; and the points 230 that include a contact point 231 coming into contact with a side of the conductor 220, and a connection point 232 connected to another side of the conductor 220 and that are electrically connected to the processor 210.

The conductor 220 is mounted on at least a portion of at least one surface of the case 50. For example, the conductor 220 is mounted on the case 50 through an adhesive material, joining, welding, screw coupling, etc. In an embodiment, the conductor 220 may be mounted on the case 50 while the entire region of the conductor 220 that faces the case 50 is in close contact with the case 50.

The conductor 220 includes a conductive material.

In an embodiment, for example, the conductive material includes at least one of a metal, a conductive polymer, and a combination thereof.

In an embodiment, for example, the metal includes at least one or more selected from the group consisting of gold (Au), silver (Ag), copper (Cu), nickel (Ni), iron (Fe), tungsten (W), and combinations thereof.

In an embodiment, for example, the conductive polymer may include at least one or more selected from the group consisting of a polythiophene-based conductive polymer, polypyrrole, polyphenylene, polyaniline, polyacetylene, poly sulfur nitride, and combinations of at least two or more thereof.

However, examples of the conductive material included in the conductor 220 are not limited thereto. Any suitable material that can allow current to flow may be applied to the conductor 220.

In an embodiment, for example, the conductor 220 is formed in the form of a thin plate. In an embodiment, the conductor 220 is mounted on the case 50 through an adhesive tape, an adhesive, welding, screw coupling, etc. In an embodiment, for example, the conductor 220 is formed in the form of a thin tape. In this case, the conductor 220 may be attached to and mounted on the case 50.

For example, the conductor 220 may be formed in a polygonal shape, a circular shape, or a mixed shape thereof. For example, the conductor 220 may be formed to be longer in one direction than in another direction. For example, the conductor 220 may be formed in the shape of a rectangular plate.

A thickness of the conductor 220 is not limited. The conductor 220 may have a thickness of any size as long as the thickness allows the conductor 220 to come into close contact with the case 50 and be bent together with the case 50 if the case 50 expands. Accordingly, the conductor 220 may not be separated from the case 50 even if the secondary battery 100 reaches a swollen state.

For example, the conductor 220 is located offset from a central portion of the case 50 on a surface of the case 50.

In FIGS. 3 and 4, "A" indicates a central portion of the case 50. For example, the electrode assembly 40 may expand the most in a certain (e.g., predetermined) direction at the time of expansion. The central portion "A" of the case 50 shows a central line of a surface perpendicular to the certain (e.g., predetermined) direction. At this time, the central line indicates a line at which the case 50 forms line symmetry about the central line. For example, if the case 50 is formed in the form of a quadrangular pouch, there may be two central portions A of the case 50. In FIG. 3, the central portion "A" of the case 50 is shown illustratively.

The conductor 220 is located offset from the central portion "A" of the case 50 based on the central portion "A" of the case 50.

For example, a central portion of the conductor 220 and the central portion "A" of the case 50 may not coincide. For example, one side of the conductor 220 may be located closer to the central portion of the case 50 than another side thereof. In an embodiment, for example, the conductor 220 is formed to longitudinally extend in a direction. In an embodiment, for example, one side of the conductor 220 in a direction is located relatively close to the central portion "A" of the case 50, and another side of the conductor 220 in the direction is located relatively far from the central portion "A" of the case 50.

For example, a direction longitudinally extending from the conductor 220 may be a direction perpendicular to a straight line indicating the central portion of the conductor 220.

The points 230 function as points of contact electrically connected to the conductor 220. For example, the points 230 include the contact point 231 and the connection point 232. The points 230 are for electrical connection to the conductor 220, and the points 230 include a conductive material.

The contact point 231 comes into contact with a side of the conductor 220. For example, the contact point 231 comes into contact with the conductor 220 in the circuit. For example, the contact point 231 comes into contact with the side of the conductor 220 in the direction.

At this time, the circuit may further include a contact line 241 electrically connecting the contact point 231 and the processor 210.

For example, the contact point 231 comes into contact with the conductor 220 if the volume of the case 50 is less than a certain (e.g., predetermined) volume. The volume less than a certain (e.g., predetermined) volume is a volume in an initial state in which the case 50 is not expanded or a volume in a state that may be determined as a normal state despite expansion of the case 50. The circuit is conductive when the contact point 231 is in contact with the conductor 220.

For example, the contact point 231 is separated from the conductor 220 if the volume of the case 50 reaches the certain (e.g., predetermined) volume or more. If the contact point 231 is separated from the case 50, the circuit may be shorted.

The connection point 232 is connected to another side of the conductor 220. For example, the connection point 232 serves to be connected to the conductor 220 in the circuit. For example, the connection point 232 is connected to the other side of the conductor 220 in the direction. At this time, the connection point 232 may be fixed to the conductor 220 or may be separable from the conductor 220.

In an embodiment, the circuit may further include a connection line 242 electrically connecting the connection point 232 and the processor 210.

In this way, as illustrated in FIG. 3, the circuit is electrically connected through the processor 210, the conductor 220, the points 230, and metal lines 240. That is, the circuit is conductive before the secondary battery 100 reaches a swollen state.

As illustrated in FIG. 4, if the secondary battery 100 reaches a swollen state while the conductor 220 is still in close contact with the case 50, the contact point 230 is separated from the conductor 220. This is because the secondary battery 100 undergoes elliptical expansion in which a central portion expands significantly in the certain (e.g., predetermined) direction. That is, the circuit is shorted if the secondary battery 100 reaches a swollen state.

As described above, the processor 210 is electrically connected to the circuit or included in the circuit. Accordingly, the processor 210 may recognize if the circuit is shorted. Accordingly, the case in which the circuit is shorted corresponds to a state in which the secondary battery 100 is physically swollen.

Accordingly, if the contact point 231 is separated from the conductor 220 and the circuit is shorted, the processor 210 determines that the secondary battery 100 is in a swollen state.

In this way, the sensor 200 may sense a state of the secondary battery 100, and, for example, the sensor 200 may determine whether the secondary battery 100 is swollen.

For example, if the secondary battery 100 corresponds to a swollen state, the processor 210 may perform additional control to prevent or substantially prevent swelling of the secondary battery 100 or slow down the rate of swelling of the secondary battery 100.

For example, if the secondary battery 100 is determined as being in a swollen state, the processor 210 may control charge-discharge of the secondary battery 100 to be suppressed. In this way, the processor 210 prevents or substantially prevents swelling of the secondary battery 100 from accelerating due to charge-discharge.

For example, if the secondary battery 100 is determined as being in a swollen state, the processor 210 may control a temperature reference value of a high-temperature protection operation preset for the secondary battery 100 to decrease. In this way, the processor 210 allows the secondary battery 100 to quickly perform the high-temperature protection operation.

For example, if the secondary battery 100 is determined as being in a swollen state, the processor 210 may control a charging voltage of the secondary battery 100 to decrease. In this way, the processor 210 prevents or substantially prevents swelling of the secondary battery 100 from accelerating due to overcharging.

Through such a configuration, the sensor 200 may easily sense a state of the secondary battery 100 without using a separate complex or expensive component. For example, the sensor 200 may easily determine whether the secondary battery 100 is in a swollen state.

Various examples of the sensor 200 applicable to the secondary battery 100 will be described below.

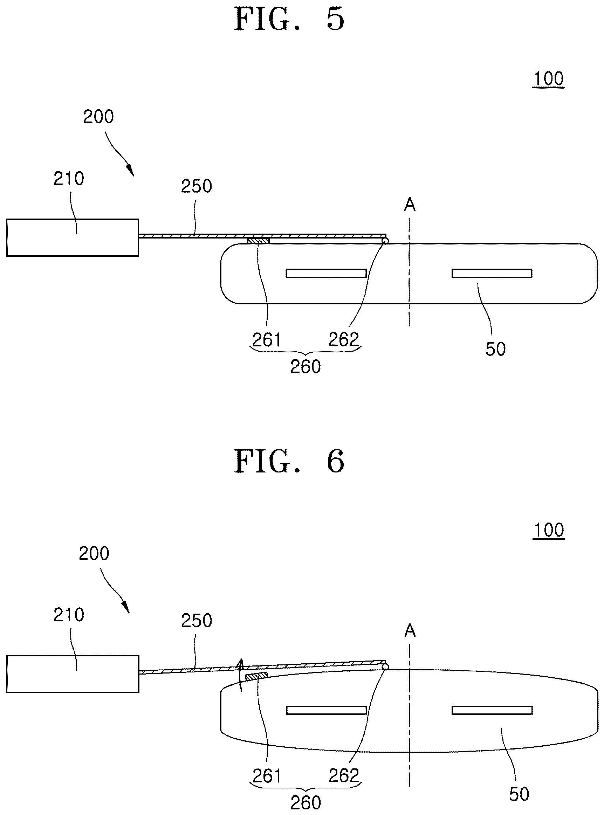

FIG. 5 is a view schematically illustrating a secondary battery according to an embodiment of the present invention.

FIG. 6 is a view illustrating an example in which the secondary battery described with reference to FIG. 5 is in a swollen state.

A secondary battery 100 according to an embodiment of the present invention includes an electrode assembly 40; a case 50 storing the electrode assembly 40; and a sensor 200.

The sensor 200 includes a circuit provided on a surface of the case 50 and shorted in response to a volume of the case 50 reaching a certain (e.g., predetermined) volume or more; and a processor 210 to determine a state of the secondary battery 100 based on whether the circuit is shorted.

In an embodiment, for example, the circuit includes a conductor 261 attached to a surface of the case 50; a fixed terminal 262 located apart from the conductor 261 and attached to the surface of the case 50; and a line 250 having an end fixed on the surface of the case 50 by the fixed terminal 262 and another end connected to the processor 210 and having at least a portion in contact with the conductor 261.

The circuit includes a conductive structure 260. For example, the conductive structure 260 includes the conductor 261 and the fixed terminal 262 located apart from each other.

The conductor 261 is attached to a surface of the case 50. In the description of the conductor 261, content overlapping with the content described above with reference to FIGS. 3 and 4 may be omitted.

The conductor 261 is mounted on at least a portion of at least one surface of the case 50. In an embodiment, the conductor 261 may be mounted on the case 50 while an entire region of the conductor 261 that faces the case 50 is in close contact with the case 50. The conductor 261 includes a conductive material.

The fixed terminal 262 is mounted on at least another portion of the at least one surface of the case 50. That is, the fixed terminal 262 is mounted on the same surface of the case 50 on which the conductor 261 is mounted and is located apart from the conductor 261. The fixed terminal 262 includes a conductive material.

In an embodiment, for example, a virtual straight line extending from the conductor 261 toward the fixed terminal 262 may be perpendicular or parallel to a central portion of the secondary battery 100.

In an embodiment, for example, the fixed terminal 262 is located closer to a central portion "A" of the case 50 than the conductor 261. For example, the fixed terminal 262 is located relatively close to the central portion "A" of the case 50, and the conductor 261 is located relatively close to an outer edge portion of the case 50. That is, if the secondary battery 100 swells, a height change of the fixed terminal 262 may be greater than a height change of the conductor 261.

The line 250 is electrically connected to the conductive structure 260. The line 250 includes a conductive material.

The line 250 extends in a same direction as the virtual straight line extending from the conductor 261 toward the fixed terminal 262.

An end of the line 250 is connected to the fixed terminal 262. The fixed terminal 262 is fixed to the line 250. That is, the fixed terminal 262 is coupled to the end of the line 250 and is not separated from the line 250 even if the secondary battery 100 swells.

Another end of the line 250 may be fixed to the processor 210.

At least a portion of the line 250 that is located between the end and the another end comes into contact with the conductor 261. If the secondary battery 100 swells, the end of the line 250 moves a relatively long distance together with the fixed terminal 262. On the other hand, even if the secondary battery 100 swells, the conductor 261 is unable to move the distance that the fixed terminal 262 moves. Accordingly, if the secondary battery 100 swells, the line 250 is separated from the conductor 261.

In this way, as illustrated in FIG. 5, the circuit is electrically connected through the conductor 261, the line 250, and the fixed terminal 262. Also, the circuit is connected to the processor 210 through the line 50. In an embodiment, although not illustrated, the circuit may be connected to the processor 210 by another wire connected to the line 250. That is, the circuit is conductive before the secondary battery 100 reaches a swollen state.

As illustrated in FIG. 6, if the secondary battery 100 reaches a swollen state, while the conductor 261 of the circuit is still in close contact with the case 50, the line 250 is separated from the conductor 261. This is because a portion of the secondary battery 100 where the fixed terminal 262 is located expands relatively more than a portion of the secondary battery 100 where the conductor 261 is located. Accordingly, the circuit is shorted if the secondary battery 100 reaches a swollen state. In an embodiment, if the secondary battery 100 reaches a swollen state, the circuit has a flow of current different from when the secondary battery 100 is in a normal state.

As described above, the processor 210 is electrically connected to the circuit or included in the circuit. Accordingly, the processor 210 may recognize if the circuit is shorted or the flow of current in the circuit changes. Accordingly, a case in which the circuit is shorted corresponds to a state in which the secondary battery 100 is physically swollen.

Accordingly, if the line 250 is separated from the conductor 261 and the circuit is shorted, the processor 210 determines that the secondary battery 100 is in a swollen state. In this way, the sensor 200 may sense a state of the secondary battery 100, and, for example, the sensor 200 may determine whether the secondary battery 100 is swollen.

For example, if the secondary battery 100 corresponds to a swollen state, the processor 210 may perform additional control to prevent or substantially prevent swelling of the secondary battery 100 or slow down the rate of swelling of the secondary battery 100.

For example, if the secondary battery 100 is determined as being in a swollen state, the processor 210 may control charge-discharge of the secondary battery 100 to be suppressed. For example, if the secondary battery 100 is determined as being in a swollen state, the processor 210 may control a temperature reference value of a high-temperature protection operation preset for the secondary battery 100 to decrease. For example, if the secondary battery 100 is determined as being in a swollen state, the processor 210 may control a charging voltage of the secondary battery 100 to decrease.

Through such a configuration, the sensor 200 may easily sense a state of the secondary battery 100 without using a separate complex or expensive component. For example, the sensor 200 may easily determine whether the secondary battery 100 is in a swollen state.

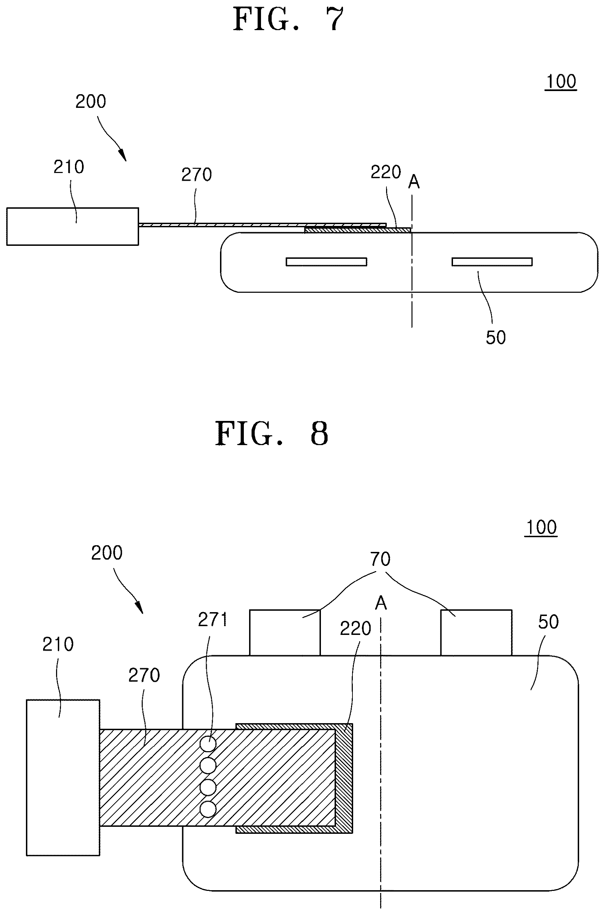

FIG. 7 is a view schematically illustrating a secondary battery according to an embodiment of the present invention.

FIG. 8 is a view schematically illustrating the secondary battery described with reference to FIG. 7.

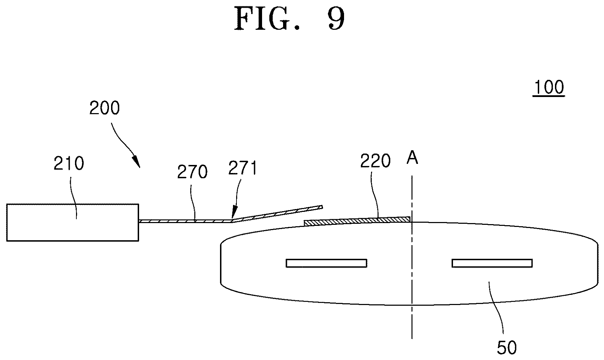

FIG. 9 is a view illustrating an example in which the secondary battery described with reference to FIGS. 7 and 8 is in a swollen state.

A secondary battery 100 according to an embodiment of the present invention includes an electrode assembly 40; a case 50 storing the electrode assembly 40; and a sensor 200.

The sensor 200 includes a circuit provided on a surface of the case 50 and shorted in response to a volume of the case 50 reaching a certain (e.g., predetermined) volume or more; and a processor 210 determining a state of the secondary battery 100 based on whether the circuit is shorted.

For example, the circuit includes a conductor 220 attached to a surface of the case 50; and a plate 270 having an end in contact with the conductor 220 and another end connected to the processor 210 and forming a weak portion 271 between the end and the another end.

The conductor 220 is attached to a surface of the case 50. In the description of the conductor 220, content overlapping with the above content describing the conductor 220 of FIGS. 3 and 4 or the conductor 261 of FIGS. 5 and 6 may be omitted.

The conductor 220 is mounted on at least a portion of at least one surface of the case 50. In an embodiment, the conductor 220 may be mounted on the case 50 while the entire region of the conductor 220 that faces the case 50 is in close contact with the case 50. The conductor 220 includes a conductive material.

In an embodiment, the plate 270 is formed longer in a first direction than in a second direction and is formed to extend in the first direction. The first direction is a direction from the processor 210 toward the conductor 220. The first direction is perpendicular to the second direction.

The plate 270 may be formed in the form of a thin plate that is longer in the first direction than in the second direction. However, a thickness or shape of the plate 270 is not limited thereto.

An end of the plate 270 is in contact with the conductor 220 and another end is connected to the processor 210 in the first direction. The end of the plate 270 is separably in contact with the conductor 220. For example, the end of the plate 270 may be separated from the conductor 220 if the secondary battery 100 reaches a swollen state.

The plate 270 electrically connects the processor 210 and the conductor 220 and allows the circuit to be conductive. Accordingly, the plate 270 includes a conductive material.

The weak portion 271 is formed on a portion of the plate 270.

In an embodiment, for example, the weak portion 271 may be formed in the form of holes as illustrated in FIG. 8. However, the weak portion 271 is not limited thereto, and, for example, the weak portion 271 may include a brittle material or may be formed in the form of a folding line.

A distribution of the overall shape of the weak portion 271 may be perpendicular to the first direction. In an embodiment, for example, the weak portion 271 includes a plurality of holes, and the plurality of holes may be disposed perpendicular to the first direction. In an embodiment, for example, the weak portion 271 is formed in the form of a folding line, and the folding line may be perpendicular to the first direction. However, an arrangement or shape of the weak portion 271 is not limited thereto, and the weak portion 271 may be formed in the form of a single large hole or formed in the form of a plurality of folding lines parallel to each other.

The weak portion 271 is deformed when the end of the plate 270 receives a force of a certain (e.g., predetermined) magnitude or more from the conductor 220.

For example, as the secondary battery 100 expands, it pushes the conductor 220 up significantly in a certain (e.g., predetermined) direction. Accordingly, the conductor 220 also pushes the end of the plate 270 in contact with the conductor 220 up, and applies a force to the plate 270. At this time, the weak portion 271 may be deformed. As the weak portion 271 is deformed (for example, bent), the end of the plate 270 may be folded away from the conductor 220 based on the weak portion 271. In an embodiment, as the weak portion 271 is deformed (for example, damaged), the end of the plate 270 may be separated from the conductor 220.

At this time, when the end of the plate 270 is separated from the conductor 220, the circuit may be shorted. In an embodiment, when the end of the plate 270 is separated from the conductor 220, a flow of current in the circuit may change.

As illustrated in FIGS. 7 and 8, the circuit is electrically connected through the processor 210, the conductor 220, and the plate 270. That is, the circuit is conductive before the secondary battery 100 reaches a swollen state.

As illustrated in FIG. 9, if the secondary battery 100 reaches a swollen state, while the conductor 220 is still in close contact with the case 50, the plate 270 is separated from the conductor 220 as the weak portion 271 is deformed. The secondary battery 100 may undergo elliptical expansion in which a central portion expands significantly in a certain (e.g., predetermined) direction. Accordingly, the circuit is shorted when the secondary battery 100 reaches a swollen state.

As described above, the processor 210 is electrically connected to the circuit or included in the circuit. Accordingly, the processor 210 may recognize if the circuit is shorted. In an embodiment, if a flow of current in the circuit changes, the processor 210 may recognize a change in a measured value of current, voltage, resistance, or the like.

The processor 210 determines that the secondary battery 100 is in a swollen state if the end of the plate 270 is separated from the conductor 220, and the circuit is shorted or the flow of current in the circuit changes.

In this way, the sensor 200 may sense a state of the secondary battery 100, and, for example, the sensor 200 may determine whether the secondary battery 100 is swollen.

For example, when the secondary battery 100 corresponds to a swollen state, the processor 210 may perform additional control to prevent or substantially prevent swelling of the secondary battery 100 or slow down the rate of swelling of the secondary battery 100.

For example, if the secondary battery 100 is determined as being in a swollen state, the processor 210 may control charge-discharge of the secondary battery 100 to be suppressed. In an embodiment, for example, if the secondary battery 100 is determined as being in a swollen state, the processor 210 may control a temperature reference value of a high-temperature protection operation preset for the secondary battery 100 to decrease. In an embodiment, for example, if the secondary battery 100 is determined as being in a swollen state, the processor 210 may control a charging voltage of the secondary battery 100 to decrease.

Through such a configuration, the sensor 200 may easily sense a state of the secondary battery 100 without using a separate complex or expensive component. For example, the sensor 200 may easily determine whether the secondary battery 100 is in a swollen state.

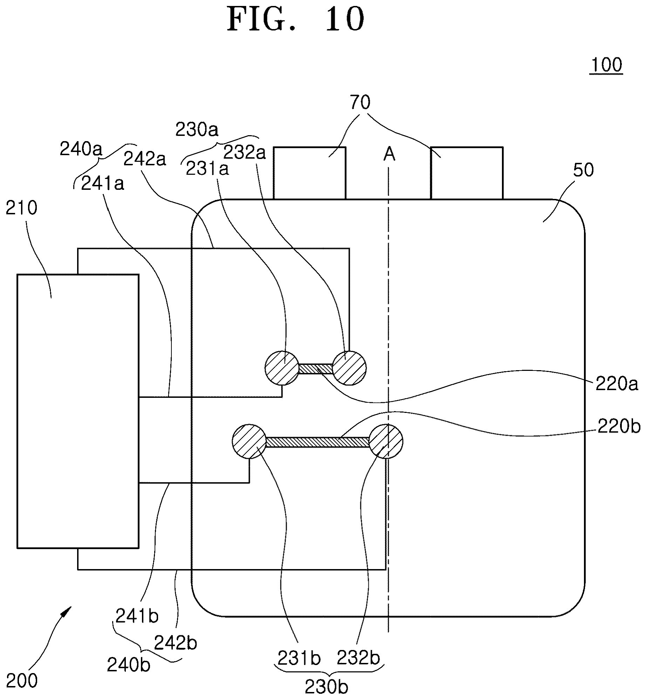

FIG. 10 is a view schematically illustrating a secondary battery according to an embodiment of the present invention.

A secondary battery 100 according to an embodiment of the present invention includes an electrode assembly 40; a case 50 storing the electrode assembly 40; and a sensor 200.

The sensor 200 includes a circuit provided on a surface of the case 50 and shorted in response to a volume of the case 50 reaching a certain (e.g., predetermined) volume or more; and a processor 210 determining a state of the secondary battery 100 based on whether the circuit is shorted.

In an embodiment, for example, the circuit includes a first circuit and a second circuit disposed apart from each other, and the processor 210 determines a degree of swelling of the secondary battery 100 based on whether the first circuit and the second circuit are shorted.

For example, the first circuit includes a first conductor 220a formed to have a first length and attached to a surface of the case 50; and first points 230a that include a first contact point 231a coming into contact with a side of the first conductor 220a and a first connection point 232a connected to another side of the first conductor 220a and that are electrically connected to the processor 210.

The circuit includes the first circuit and the second circuit located apart from each other.

The first circuit includes the first conductor 220a and the first points 230a.

The first conductor 220a is attached to a surface of the case 50. In the description of the first conductor 220a, content overlapping with the above content describing the conductor 220 of FIGS. 3 and 4, the conductor 220 of FIGS. 7 to 9, or the conductor 261 of FIGS. 5 and 6 may be omitted.

The first conductor 220a is mounted on at least a portion of at least one surface of the case 50. In an embodiment, the first conductor 220a may be mounted on the case 50 while the entire region of the first conductor 220a that faces the case 50 is in close contact with the case 50. The first conductor 220a includes a conductive material.

The first conductor 220a is located offset from a central portion "A" of the case 50 based on the central portion "A" of the case 50.

The first conductor 220a may be formed to have the first length.

The first points 230a function as points of contact electrically connected to the first conductor 220a. For example, the first points 230a include the first contact point 231a and the first connection point 232a. The first points 230a provide electrical connection to the first conductor 220a, and the first points 230a include a conductive material.

The first contact point 231a comes into contact with a side of the first conductor 220a. For example, the first contact point 231a comes into contact with the first conductor 220a in the first circuit. For example, the first contact point 231a comes into contact with a side of the first conductor 220a in a direction.

In an embodiment, the first circuit may further include a first contact line 241a electrically connecting the first contact point 231a and the processor 210.

For example, the first contact point 231a comes into contact with the first conductor 220a if the volume of the case 50 is less than a first volume (e.g., first predetermined volume). The first volume (e.g., first predetermined volume) is greater than a second volume (e.g., second predetermined volume) which will be described below. When the first contact point 231a is in contact with the first conductor 220a, the first circuit is conductive.

For example, the first contact point 231a is separated from the first conductor 220a when the volume of the case 50 reaches the first predetermined volume or more. When the first contact point 231a is separated from the case 50, the first circuit may be shorted.

The first connection point 232a is connected to another side of the first conductor 220a. For example, the first connection point 232a is connected to the first conductor 220a in the first circuit. For example, the first connection point 232a is connected to another side of the first conductor 220a in the direction. The first connection point 232a may be fixed to the first conductor 220a or may be separable from the first conductor 220a.

The first circuit may further include a first connection line 242a electrically connecting the first connection point 232a and the processor 210.

If the first contact point 231a is separated from the first conductor 220a and the first circuit is shorted, the processor 210 determines that the secondary battery 100 is in a first swollen state.

For example, the second circuit includes a second conductor 220b formed to have a second length longer than the first length and attached to a surface of the case 50 while spaced apart from the first conductor 220a; and second points 230b that include a second contact point 231b coming into contact with a side of the second conductor 220b and a second connection point 232b connected to another side of the second conductor 220b and that are electrically connected to the processor 210.

The second circuit includes the second conductor 220b and the second points 230b.

The second conductor 220b is attached to a surface of the case 50. In the description of the second conductor 220b, content overlapping with the above content describing the conductor 220 of FIGS. 3 and 4, the conductor 220 of FIGS. 7 to 9, or the conductor 261 of FIGS. 5 and 6 may be omitted.

The second conductor 220b is mounted on at least a portion of at least one surface of the case 50. In an embodiment, the second conductor 220b may be mounted on the case 50 while the entire region of the second conductor 220b that faces the case 50 is in close contact with the case 50. The second conductor 220b includes a conductive material.

The second conductor 220b is located offset from a central portion "A" of the case 50 based on the central portion "A" of the case 50. In an embodiment, a direction in which the first conductor 220a and the second conductor 220b are spaced apart from each other may be parallel to a central line which is the central portion "A" of the case 50.

The second conductor 220b may be formed to have the second length. In an embodiment, the second length is longer than the first length.

The second points 230b are points of contact electrically connected to the second conductor 220b. For example, the second points 230b include the second contact point 231b and the second connection point 232b. The second points 230b provide electrical connection to the second conductor 220b, and the second points 230b include a conductive material.

The second contact point 231b comes into contact with a side of the second conductor 220b. For example, the second contact point 231b comes into contact with the second conductor 220b in the second circuit. For example, the second contact point 231b comes into contact with a side of the second conductor 220b in a direction.

The second circuit may further include a second contact line 241b electrically connecting the second contact point 231b and the processor 210.

For example, the second contact point 231b comes into contact with the second conductor 220b if the volume of the case 50 is less than a second volume (e.g., second predetermined volume). In an embodiment, the second volume (e.g., second predetermined volume) is smaller than the first volume (e.g., first predetermined volume). The second volume (e.g., second predetermined volume) is a volume in an initial state in which the case 50 is not expanded or a volume in a state that may be determined as a normal state despite expansion of the case 50. The circuit is conductive when the second contact point 231b is in contact with the second conductor 220b.

For example, the second contact point 231b is separated from the second conductor 220b when the volume of the case 50 reaches the second volume (e.g., second predetermined volume) or more. If the second contact point 231b is separated from the case 50, the second circuit may be shorted.

The second connection point 232b is connected to another side of the second conductor 220b. For example, the second connection point 232b may be connected to the second conductor 220b in the second circuit. For example, the second connection point 232b is connected to another side of the second conductor 220b in the one direction. The second connection point 232b may be fixed to the second conductor 220b or may be separable from the second conductor 220b.

The second circuit may further include a second connection line 242b electrically connecting the second connection point 232b and the processor 210.

If the second contact point 231b is separated from the second conductor 220b and the second circuit is shorted, the processor 210 determines that the secondary battery 100 is in a second swollen state.

As described above, the first circuit and the second circuit include the conductors 220a and 220b having lengths different from each other. Accordingly, the first circuit and the second circuit may be conductive or shorted due to a degree of swelling of the secondary battery 100 at different times. For example, the second circuit may be shorted earlier than the first circuit.

If the first circuit and the second circuit are conductive, the processor 210 determines that the secondary battery 100 is in a normal state. Also, if the first circuit is conductive and the second circuit is shorted, the processor 210 determines that the secondary battery 100 is in the first swollen state. In addition, if the first circuit and the second circuit are shorted, the processor 210 determines that the secondary battery 100 is in the second swollen state in which the secondary battery 100 is further swollen compared to the first swollen state.

In this way, the sensor 200 is able to determine not only whether the secondary battery 100 is in a swollen state but also a degree of swelling of the secondary battery 100.

For example, if the secondary battery 100 corresponds to a swollen state, the processor 210 may perform additional control to prevent or substantially prevent swelling of the secondary battery 100 or slow down the rate of swelling of the secondary battery 100. For example, the processor 210 may take appropriate action according to the degree of swelling of the secondary battery 100.

Through such a configuration, the sensor 200 may easily sense a state of the secondary battery 100 without using a separate complex or expensive component. For example, the sensor 200 may easily determine whether the secondary battery 100 is in a swollen state. In addition, the sensor 200 may determine a degree of swelling of the secondary battery 100.

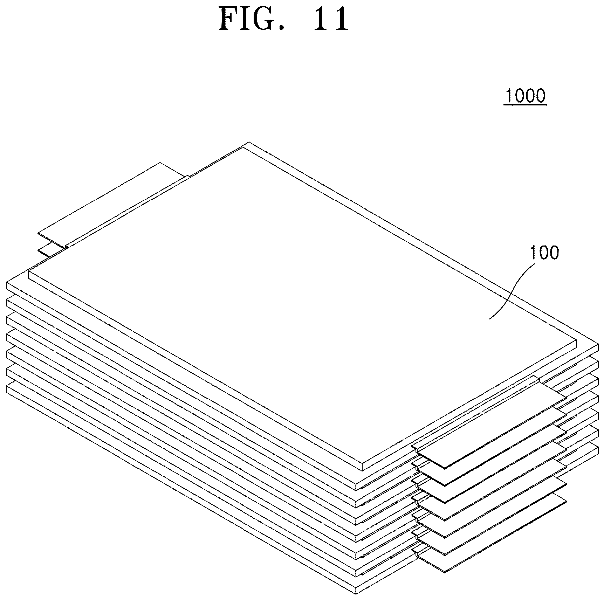

FIG. 11 is a view schematically illustrating a battery module according to an embodiment of the present invention.

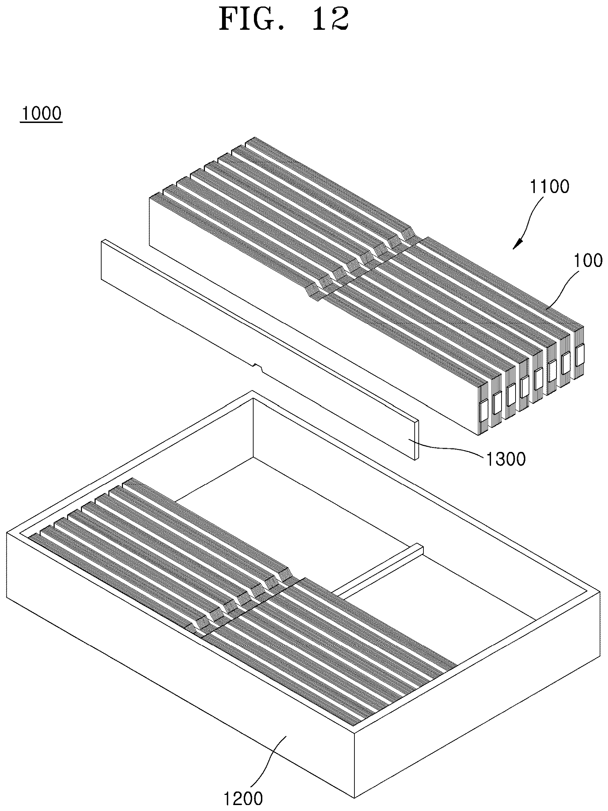

FIG. 12 is a view schematically illustrating a battery module according to an embodiment of the present invention.

A battery module 1000 according to an embodiment of the present invention includes a plurality of secondary batteries 100 (for example, including the secondary batteries 100 described above with reference to FIGS. 1 to 10); a housing 1200 accommodating the plurality of secondary batteries 100; and a sensor 200 sensing states of the secondary batteries 100 (for example, including the sensor 200 described above with reference to FIGS. 3 to 10). In an embodiment, for example, the battery module 1000 may further include an insulation sheet 1300.

The sensor 200 includes a circuit provided on a surface of the secondary battery 100 and shorted in response to a volume of the secondary battery 100 changing by a certain (e.g., predetermined) size or more; and a processor 210 determining a state of the secondary battery 100 based on whether the circuit is shorted.

For example, the sensor 200 may be mounted on the case 50 of the secondary battery 100 as described above with reference to FIGS. 3 to 10. The sensor 200 may be mounted on all of the secondary batteries 100 included in the battery module 1000 or may be mounted on at least one or more of the plurality of secondary batteries 100. For example, the sensor 200 may be disposed on the secondary battery 100 located relatively at the center among the plurality of secondary batteries 100.

At least one or more insulation sheets 1300 may be disposed between the plurality of secondary batteries 100. The insulation sheets 1300 may prevent or substantially prevent heat propagation between the secondary batteries 100.

In an embodiment, unlike in the description given above with reference to FIGS. 3 to 10, the sensor 200 may be located on the insulation sheet 1300. This is because the shape of the insulation sheet 1300 may also be deformed as swelling occurs in the secondary battery 100 in contact with the insulation sheet 1300.

In an embodiment, the processor 210 may be embedded in a BMS or the like as described above. However, the processor 210 may be a separate component from the BMS. In this case, for example, the processor 210 may be provided on at least a portion of the case 50, an inner or outer portion of the housing 1200, and the insulation sheet 1300.

Through such a configuration, the battery module 1000 according to one or more embodiments of the present invention provides a way of easily sensing swelling of the secondary battery 100.

According to one or more embodiments of the present invention, swelling of a secondary battery can be sensed without a separate temperature sensor or pressure sensor.

According to one or more embodiments of the present invention, a rate of progress of swelling of a secondary battery can be slowed.

According to one or more embodiments of the present invention, safety of a secondary battery and a battery module including the secondary battery can be improved.

## Claims

1. A secondary battery (100) comprising:
a case (50) accommodating an electrode assembly (40); and
a sensor (200),
wherein the sensor (200) comprises a circuit on a surface of the case (50) and configured to be shorted in response to a volume of the case (50) reaching a certain volume or more; and a processor (210) configured to determine a state of the secondary battery (100) based on whether the circuit is shorted.

2. The secondary battery (100) as claimed in claim 1, wherein the surface of the case (50) is a surface perpendicular to a direction in which a change in the volume of the case (50) is greatest.

3. The secondary battery (100) as claimed in claim 1 or 2, wherein the circuit comprises a conductor (220) attached to the surface of the case (50); and points (230) that include a contact point (231) coming into contact with a side of the conductor (220) and a connection point (232) connected to another side of the conductor (220) and that are electrically connected to the processor (210).

4. The secondary battery (100) as claimed in claim 3, wherein the conductor (220) is located offset from a central portion of the case (50) on the surface of the case (50).

5. The secondary battery (100) as claimed in claim 4, wherein the side of the conductor (220) is located closer to the central portion than the another side thereof.

6. The secondary battery (100) as claimed in claim 3, wherein, if the contact point (231) is separated from the conductor (220) and the circuit is shorted, the processor (210) determines that the secondary battery (100) is in a swollen state.

7. The secondary battery (100) as claimed in claim 1, wherein the circuit comprises:
a conductor (261) attached to the surface of the case (50);
a fixed terminal (262) located apart from the conductor (261) and attached to the surface of the case (50); and
a line (250) having an end fixed on the surface of the case (50) by the fixed terminal (262) and another end connected to the processor (210) and having at least a portion in contact with the conductor (261).

8. The secondary battery (100) as claimed in claim 7, wherein the fixed terminal (262) is located closer to a central portion of the case (50) than the conductor (261).

9. The secondary battery (100) as claimed in claim 1, wherein the circuit comprises:
a conductor (220) attached to the surface of the case (50); and
a plate (270) having an end in contact with the conductor (220) and another end connected to the processor (210) and forming a weak portion (271) between the end and the another end, wherein the weak portion (271) is deformed if the end receives a force of a certain magnitude or greater from the conductor (220).

10. The secondary battery (100) as claimed in claim 1, wherein
the circuit comprises a first circuit and a second circuit located apart from each other, and
the processor (210) is configured to determine a degree of swelling of the secondary battery (100) based on whether the first circuit and the second circuit are shorted.

11. The secondary battery (100) as claimed in claim 10, wherein
the first circuit comprises a first conductor (220a) having a first length and attached to the surface of the case (50); and first points (230a) that include a first contact point (231a) coming into contact with a side of the first conductor (220a) and a first connection point (232a) connected to another side of the first conductor (220a) and that are electrically connected to the processor (210), and
the second circuit comprises a second conductor (220b) having a second length longer than the first length and attached to the surface of the case (50) and spaced apart from the first conductor (220a); and second points (230b) that include a second contact point (231b) coming into contact with a side of the second conductor (220b) and a second connection point (232b) connected to another side of the second conductor (220b) and that are electrically connected to the processor (210).

12. The secondary battery (100) as claimed in claim 11, wherein, if the first circuit is conductive and the second circuit is shorted, the processor (210) determines that the secondary battery (100) is in a first swollen state, and if the first circuit and the second circuit are shorted, the processor (210) determines that the secondary battery (100) is in a second swollen state in which the secondary battery (100) is further swollen compared to the first swollen state.

13. The secondary battery (100) as claimed in any one of the preceding claims, wherein, if the secondary battery (100) is determined as being in a swollen state, the processor (210) controls charge-discharge of the secondary battery (100) to be suppressed or a temperature reference value of a high-temperature protection operation preset for the secondary battery (100) to decrease.

14. The secondary battery (100) as claimed in any one of the preceding claims, wherein the case (50) has a form of a pouch.

15. A battery module (1000) comprising:
a plurality of secondary batteries;
a housing (1200) accommodating the plurality of secondary batteries; and
a sensor (200) configured to sense a state of a secondary battery (100) of the plurality of secondary batteries,
wherein the sensor (200) comprises a circuit on a surface of the secondary battery (100) and configured to be shorted in response to a volume of the secondary battery (100) changing by a certain size or more; and a processor (210) configured to determine a state of the secondary battery (100) based on whether the circuit is shorted.
